# FASCICULE DE BREVET EUROPEEN

(11) **EP 4 259 948 B1**
(45) Date de publication et mention de la délivrance du brevet: **04.02.2026**
(21) Numéro de dépôt: 21830958.1
(22) Date de dépôt: 01.12.2021
(51) Int. Cl.: F16D 55/36, F16D 65/853

(54) **ROUE FREINÉE D'AÉRONEF**
GEBREMSTES RAD FÜR EIN FLUGZEUG
BRAKED AIRCRAFT WHEEL

(30) Priorité: 10.12.2020 FR 2013019
(43) Date de publication de la demande: 18.10.2023
(73) Titulaire: Safran Landing Systems, 78140 Vélizy-Villacoublay (FR)
(72) Inventeur: GAPIN, Arnaud, 77550 MOISSY-CRAMAYEL (FR); MARQUES, Julien, 77550 MOISSY-CRAMAYEL (FR)
(74) Mandataire: Cabinet Boettcher
(86) Numéro de dépôt international: PCT/EP2021/083828
(87) Numéro de publication internationale: WO 2022/122513

(56) Documents cités:
- WO-A1-2016/177844
- DE-A1- 3 736 508
- GB-A- 1 413 520

## Description

La présente invention concerne le domaine de l'aéronautique et plus particulièrement le refroidissement des freins équipant les roues d'aéronef.

### ARRIERE PLAN DE L'INVENTION

Un atterrisseur d'aéronef comprend généralement une jambe ayant une première extrémité reliée à une structure de l'aéronef et une deuxième extrémité pourvue d'un arbre ou essieu sur lequel une roue est montée pour pivoter. La roue comprend une jante reliée par un voile à un moyeu qui reçoit l'arbre de la jambe et définit avec la jante un espace dans lequel est disposée une pile de disques comportant en alternance des disques stators fixes par rapport à l'arbre et des disques rotors fixes par rapport à la jante. Un actionneur, par exemple un vérin hydraulique, est agencé pour exercer un effort de presse sur la pile de disques via une couronne hydraulique. La jante comprend deux rebords annulaires ou talons entre lesquels est monté un pneumatique.

Chaque freinage effectué par le pilote d'un aéronef provoque une augmentation de température des disques des freins de l'aéronef et de l'environnement immédiat de ceux-ci. Des considérations de sécurité imposent des limites maximales de température, à titre d'exemple :
- 204°C au niveau des talons des jantes pour préserver les pneumatiques et protéger le personnel amené à intervenir au voisinage des roues ;
- 120°C au niveau de la couronne hydraulique pour éviter une décomposition du fluide hydraulique en composés sulfuriques acides néfastes pour le circuit hydraulique.

Par ailleurs, ces mêmes considérations de sécurité amènent à interdire le décollage d'un aéronef si la température au niveau des disques d'un frein est supérieure à 400°C. Cette dernière limitation peut impacter directement le temps d'escale de l'aéronef (connu sous l'acronyme anglais de TAT, pour « Turn Around Time »), puisque le pilote doit impérativement attendre que la température des disques de frein descende au-dessous de ce seuil pour pouvoir décoller.

Différents procédés ont été proposés pour accélérer le refroidissement des disques de frein et de leur environnement immédiat. Il est ainsi connu de positionner un ventilateur électrique en bout d'essieu pour créer un flux d'air autour des disques de frein. Cependant, l'organisation d'un flux d'air efficace entre la jante et les disques est difficile, et un flux d'air trop important risque de favoriser une oxydation des disques en carbone. Qui plus est, le ventilateur est générateur de bruits et doit être démonté à chaque manipulation de roue (changement de pneu, de disque de frein...), ce qui engendre des opérations et donc des coûts de maintenance supplémentaires.

Il a été également proposé d'équiper le frein, ou la roue, d'ailettes de refroidissement pour évacuer la chaleur émise lors du freinage. Cependant, ce procédé ne permet pas de diminuer le temps de refroidissement des disques de manière significative, les ailettes n'étant pas localisées sur les pièces les plus chaudes et des contraintes géométriques d'implantation limitant l'étendue des surfaces d'échange thermique offertes par les ailettes avec l'air ambiant.

Le document DE3736508A1 montre une roue d'aéronef d'après l'état de la technique.

### OBJET DE L'INVENTION

L'invention a donc pour but de permettre d'améliorer le refroidissement des disques d'un frein.

### RESUME DE L'INVENTION

A cet effet, l'invention propose une roue d'aéronef selon la revendication 1.

L'implantation de tels caloducs permet de capter la chaleur transmise par les disques à la roue et/ou au tube de torsion, et de la transporter pour la dissiper dans l'air ambiant, ce qui engendre une diminution du temps d'attente en escale et du risque de détérioration du pneumatique.

De manière particulière, les premiers tenons sont venus de matière avec la roue.

De manière particulière, les premiers tenons sont des barrettes rapportées sur la roue.

Selon une caractéristique particulière de l'invention, le caloduc est de forme tubulaire et est implanté dans un perçage réalisé dans le tenon.

De manière particulière, le caloduc est maintenu dans le tenon par hydroformage.

De manière particulière, un matériau conducteur de chaleur est déposé entre le caloduc et le tenon.

Selon une autre caractéristique particulière de l'invention, le dissipateur thermique comprend des ailettes conférant à l'extrémité du caloduc une surface libre augmentée.

De manière particulière, les ailettes sont fixées au caloduc par hydroformage.

Selon une autre caractéristique particulière de l'invention, le caloduc s'étend parallèlement à l'axe de rotation de la roue.

Selon une autre caractéristique particulière de l'invention, le caloduc est légèrement incliné par rapport à l'axe de rotation de la roue, l'extrémité du caloduc en saillie du tenon étant plus éloignée dudit axe de rotation que la portion de caloduc maintenue dans le tenon et le caloduc formant avec l'axe de rotation de la roue un angle inférieur ou égal à celui défini par ledit axe de rotation et une paroi externe de la jante destinée à recevoir un pneumatique.

L'invention concerne également un atterrisseur d'aéronef comportant au moins une telle roue.

L'invention concerne aussi un aéronef comportant au moins un tel atterrisseur.

### BREVE DESCRIPTION DES DESSINS

L'invention sera mieux comprise à la lumière de la description qui suit, laquelle est purement illustrative et non limitative, et doit être lue en regard de l'unique dessin annexé :
- la figure 1 est une vue schématique éclatée d'un atterrisseur d'aéronef équipé d'une roue (sans son pneumatique pour plus de clarté) ;
- la figure 2 est une vue en coupe axiale d'une roue selon l'invention montée sur un essieu de l'atterrisseur d'aéronef illustré à la figure 1 ;
- la figure 3 est une vue de face partielle de la roue illustrée à la figure 2.

### DESCRIPTION DETAILLEE DE L'INVENTION

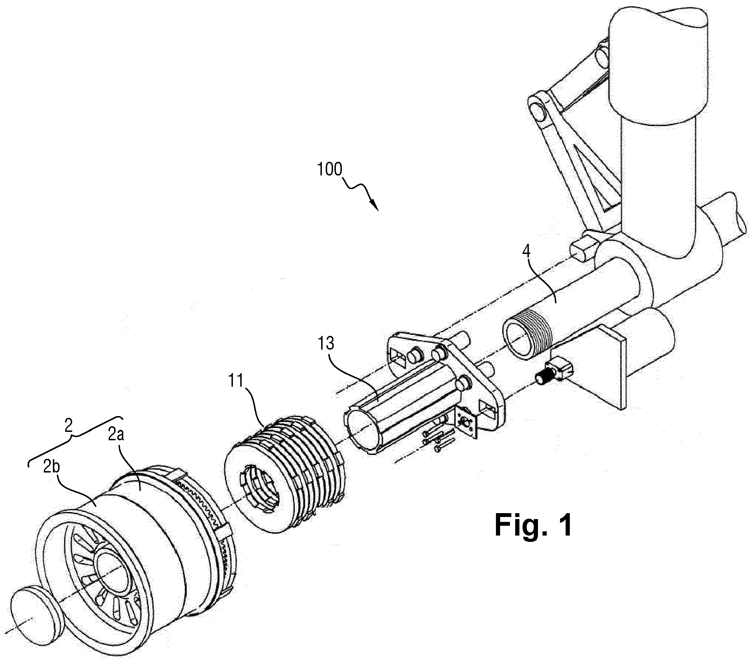

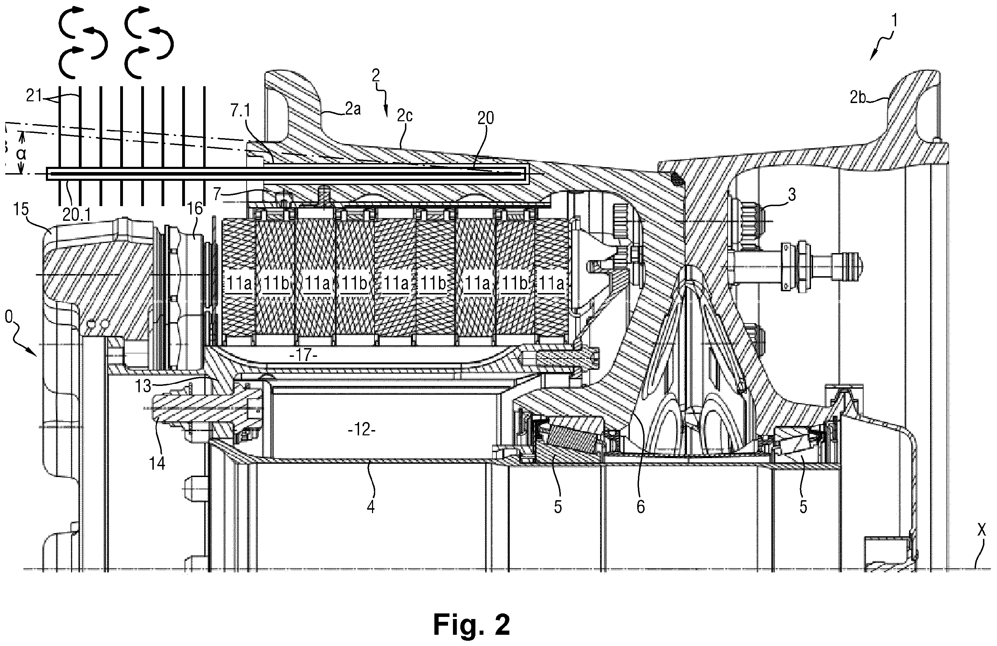

En référence aux figures 1 et 2, l'invention s'applique à un aéronef comprenant des atterrisseurs principaux comportant chacun une jambe 100 ayant une première extrémité articulée à une structure de l'aéronef et une deuxième extrémité pourvue d'un essieu 4 et formant ainsi une main d'essieu. Chaque essieu 4 est pourvu d'une roue 1 comprenant une jante 2 reliée par un voile à un moyeu 6 monté pour tourner sur l'essieu 4 autour d'une axe X au moyen de roulements 5 portés par le moyeu 6. La jante 2 comporte ici deux demi-jantes 2a, 2b qui sont assemblées par des boulons 3 et qui comportent chacune un talon de telle manière qu'un pneumatique peut être emprisonné entre les talons.

La roue 1 est équipée d'un frein 10 comportant des disques 11 reçus dans un espace annulaire délimitée par la demi-jante 2a et le moyeu 6. La pile de disques 11 est enfilé sur un tube de torsion 13 fixé à la main d'essieu par des boulons et comprend des disques stators 11a et des disques rotor 11b. Le frein 10 comporte un support 15 d'actionneurs de freinage 16 adaptés à appliquer sélectivement un effort de freinage sur la pile de disques 11. Les actionneurs de freinage 16 sont ici des pistons hydrauliques.

Les disques rotor 11b ont un pourtour externe pourvu d'encoches dans chacune desquelles est engagée un premier tenon 7 venu de matière avec la demi-jante 2a pour lier en rotation les disques rotors 11b et la demi-jante 2a. Les disques stators 11a ont un pourtour interne pourvu d'encoches recevant chacune un deuxième tenon 17 solidaire du tube de torsion 13. Tout ceci est bien connu et n'est rappelé que pour situer l'invention.

Conformément au mode de réalisation particulier de l'invention illustré à la figure 1, chacun des premiers tenons 7 de la jante 2 comprend un perçage 7.1 non traversant ménagé pour s'étendre dans la longueur de chaque premier tenon 7. Dans chacun des perçages 7.1 est implanté un caloduc 20 fritté de forme tubulaire. Le caloduc 20 s'étend parallèlement à l'axe de rotation de la roue en regard des bords de chaque disque 11 et seule une extrémité 20.1 du caloduc 20 est en saillie à l'extérieur du perçage 7.1 et de la demi-jante 2a.

Le caloduc 20 est ici maintenu en position dans le tenon 7 par hydroformage (à chaud ou à froid). Ainsi, après avoir été inséré dans le tenon 7, le caloduc 20 est déformé plastiquement et la forme du caloduc 20 est localement déterminée par le perçage 7.1 qui fait office de matrice. Un contact étroit est ainsi assuré entre la surface externe du caloduc 20 et la paroi du perçage 7.1.

Afin d'abaisser fortement la résistance de contact entre le caloduc 20 et le perçage 7.1 du tenon 7, un matériau conducteur de chaleur tel qu'une colle thermique, une patte thermique ou un métal expansible à basse température peut être déposé entre le caloduc 20 et les parois du tenon 7 définissant le perçage 7.1. On comprend que le contact est renforcé entre la surface externe du caloduc 20 et la paroi du perçage 7.1 favorisant un transfert thermique de l'un à l'autre par conduction.

A l'extrémité 20.1 du caloduc 20 sont disposées une pluralité d'ailettes 21 s'étendant chacune dans un plan orthogonal à l'axe X de rotation de la roue 1. Les ailettes 21 sont ici espacées les unes des autres à intervalles réguliers et constituent un dissipateur thermique conférant à l'extrémité 20.1 du caloduc 20 une surface libre augmentée.

Les ailettes 21 sont ici fixées au caloduc 20 par hydroformage après avoir été enfilées sur la portion d'extrémité 20.1 du caloduc 20. Ainsi, la portion d'extrémité 20.1 du caloduc 20 est déformée plastiquement et son diamètre est localement déterminé par celui des orifices par lesquels sont insérées les ailettes 21. Le contact est ainsi renforcé entre la surface externe du caloduc 20 et les ailettes 21 favorisant un transfert thermique de l'un à l'autre par conduction.

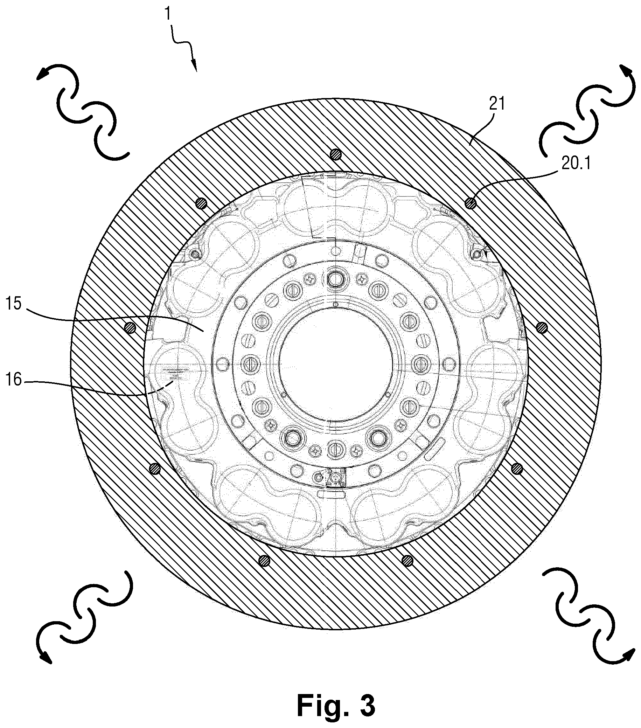

Il importe que les ailettes 21 ne gênent pas la rotation de la roue 1 ni le fonctionnement du frein 10 et de ses actionneurs de freinage 16. Les ailettes 21 devront en conséquence s'étendre de manière à dégager un espace suffisant vis-à-vis du frein 10 et de la jante 2. Les ailettes 21 ont ici une forme annulaire et s'étendent autour du support 15 (figure 3).

Les caloducs 20 munis d'ailettes 21 permettent de capter la chaleur transmise par les disques 11 à la demi-jante 2a et de la transporter vers les ailettes 21 pour être dissipée par convection dans l'air ambiant. Leur implantation dans les tenons 7 a pour avantage de capter la chaleur au plus près des disques 11 et donc d'en limiter la diffusion dans la jante 2, ce qui engendre une diminution du temps d'attente en escale et du risque de détérioration du pneumatique.

On comprend que les caloducs 20 s'étendent sensiblement à l'horizontale lorsque l'atterrisseur est en position sortie. L'usage de caloducs frittés permet de s'affranchir de la gravité, de tels caloducs fonctionnant dans toutes les positions par rapport à la gravité, et en particulier en position horizontale comme c'est le cas des caloducs 20.

On notera que l'implantation des caloducs 20 dans les tenons 7 de la jante 2 est simple à mettre en œuvre, que leur fonctionnement est entièrement passif et donc fiable, et qu'ils peuvent être implantés sur des freins existants.

Bien entendu, l'invention n'est pas limitée au mode de réalisation décrit mais englobe toute variante entrant dans le champ de l'invention telle que définie par les revendications.

Bien que les tenons 7 soient ici venus de matière avec la demi-jante 2a, les tenons 7 peuvent aussi être des barrettes rapportées sur la demi-jante 2a et dans lesquelles sont implantés les caloducs 20.

Bien que les caloducs 20 soient ici implantés dans des tenons solidaires de la demi-jante 2a, ils peuvent aussi être implantés dans les tenons 17 solidaires du tube de torsion 13 (ou dans des barrettes rapportées sur le tube de torsion 13) pour capter la chaleur des disques 11 et en limiter la diffusion dans ledit tube de torsion 13.

Bien qu'ici l'ensemble des tenons 7 soit pourvu d'un caloduc 20, seule une partie des tenons 7 peuvent accueillir un caloduc 20.

Bien qu'ici l'extrémité 20.1 des caloducs 20 soit pourvue d'ailettes 21, d'autres types de dissipateur thermique peuvent être utilisés pour dissiper la chaleur captée par le caloduc 20.

Le nombre et la forme des ailettes 21 peuvent différer de celles illustrées à la figure 1.

Bien que les caloducs 20 soient ici implantés à l'horizontal, ils peuvent également être légèrement inclinés et former un angle α non nul avec l'axe X de rotation de la jante 2 afin de faciliter leur fonctionnement vis-à-vis de la gravité. Les caloducs 20 pourront notamment être disposés en cône. L'extrémité 20.1 en saillie des caloducs 20 sera ainsi plus éloignée de l'axe X que la portion des caloducs 20 maintenue en position dans le tenon 7. En particulier, l'angle α sera sensiblement inférieur ou égal à l'angle β formé par l'axe X et une paroi 2c externe de la demi-jante 2a recevant le pneumatique.

Les fluides caloporteurs utilisables dans les caloducs 20 sont bien connus de l'Homme du métier et dépendent de la gamme de température de fonctionnement. Si l'eau est ici appropriée au refroidissement d'un frein équipant une roue d'aéronef, d'autres fluides ayant notamment une meilleure capacité calorifique et/ou correspondant à la plage de température de fonctionnement d'un frein d'aéronef peuvent être utilisés.

Bien que l'extrémité 20.1 du caloduc 20 soit ici en saillie de la demi-jante 2a, le perçage 7.1 peut aussi être ménagé de sorte que l'extrémité du caloduc portant les ailettes soit en saillie de la demi-jante 2b, en particulier dans le cas d'une jante monobloc. Les ailettes sont alors agencées à l'intérieur de la demi-jante 2b.

Bien qu'ici le caloduc 20 soit maintenu en position dans le tenon 7 par hydroformage, d'autres modes de fixation peuvent être utilisés (collage, boulonnage, fabrication additive...) .

## Revendications

1. Roue (1) d'aéronef comportant une jante (2) équipée de disques rotors (11b) entraînés en rotation avec la jante au moyen de premiers tenons (7) solidaires de la jante et engagées dans des encoches des disques rotors, des disques stators (11a) étant intercalés entre les disques rotors et pourvus d'encoches engagées sur des deuxièmes tenons solidaires d'un tube de torsion (13) de frein agencé pour être fixé à un essieu (4) portant la roue, la roue comportant au moins un caloduc (20) ayant une extrémité (20.1) en saillie à l'extérieur de la roue, et au moins un dissipateur thermique (21) solidaire de ladite extrémité du caloduc, **caractérisé en ce que** le caloduc est fritté et s'étend dans au moins l'un des premiers et deuxièmes tenons parallèlement à un plan passant par l'axe de rotation de la roue.

2. Roue (1) d'aéronef selon la revendication 1, dans laquelle les premiers tenons (7) sont venus de matière avec la roue (1).

3. Roue (1) d'aéronef selon la revendication 1, dans laquelle les premiers tenons (7) sont des barrettes rapportées sur la roue (1).

4. Roue (1) d'aéronef selon l'une quelconques des revendications précédentes, dans laquelle le caloduc (20) est de forme tubulaire et est implanté dans un perçage (7.1) réalisé dans le tenon (7).

5. Roue (1) d'aéronef selon la revendication 4, dans laquelle le caloduc (20) est maintenu dans le tenon (7) par hydroformage.

6. Roue (1) d'aéronef selon la revendication 5, dans laquelle un matériau conducteur de chaleur est déposé entre le caloduc (20) et le tenon (7).

7. Roue (1) d'aéronef selon l'une quelconque des revendications précédentes, dans laquelle le dissipateur thermique comprend des ailettes (21) conférant à l'extrémité (20.1) du caloduc (20) une surface libre augmentée.

8. Roue (1) d'aéronef selon la revendication 7, dans laquelle les ailettes (21) sont fixées au caloduc (20) par hydroformage.

9. Roue (1) d'aéronef selon l'une quelconque des revendications précédentes, dans laquelle le caloduc (20) s'étend parallèlement à l'axe (X) de rotation de la roue (1).

10. Roue (1) d'aéronef selon l'une quelconque des revendications 1 à 8, dans laquelle le caloduc (20) est légèrement incliné par rapport à l'axe (X) de rotation de la roue (1), l'extrémité (20.1) du caloduc en saillie du tenon étant plus éloignée dudit axe de rotation que la portion de caloduc maintenue dans le tenon et le caloduc formant avec l'axe de rotation de la roue un angle (α) inférieur ou égal à celui (β) défini par ledit axe de rotation et une paroi externe (2c) de la roue destinée à recevoir un pneumatique.

11. Atterrisseur d'aéronef comprenant au moins une roue (1) selon l'une quelconque des revendications précédentes.

12. Aéronef comprenant au moins un atterrisseur selon la revendication 11.

## Patentansprüche

1. Luftfahrzeugrad (1), enthaltend eine Felge (2), die mit Rotorscheiben (11b) ausgestattet ist, welche über fest mit der Felge verbundene und in Einkerbungen der Rotorscheiben eingreifende, erste Zapfen (7) mit der Felge drehverbunden sind, wobei zwischen den Rotorscheiben Statorscheiben (11a) angeordnet und mit Einkerbungen versehen sind, in welche zweite Zapfen eingreifen, die fest mit einem Torsionsrohr (13) einer Bremse verbunden sind, das dafür ausgelegt ist, an einer das Rad tragenden Achse (4) befestigt zu werden, wobei das Rad zumindest ein Wärmerohr (20) enthält, das ein aus dem Rad nach Außen vorstehendes Ende (20.1) und zumindest einen fest mit diesem Ende des Wärmerohrs verbundenen Kühlkörper (21) aufweist, **dadurch gekennzeichnet, dass** das Wärmerohr durch Sintern hergestellt ist und sich in den ersten und/oder den zweiten Zapfen parallel zu einer Ebene erstreckt, die entlang der Rad-Drehachse verläuft.

2. Luftfahrzeugrad (1) nach Anspruch 1, wobei die ersten Zapfen (7) aus demselben Material wie das Rad (1) gefertigt und einteilig mit diesem ausgebildet sind.

3. Luftfahrzeugrad (1) nach Anspruch 1, wobei es sich bei den ersten Zapfen (7) um Leisten handelt, die an dem Rad (1) angebracht sind.

4. Luftfahrzeugrad (1) nach einem der vorhergehenden Ansprüche, wobei das Wärmerohr (20) als ein Rohr ausgebildet ist, das in eine in dem Zapfen (7) ausgebildete Bohrung (7.1) eingesetzt ist.

5. Luftfahrzeugrad (1) nach Anspruch 4, wobei das Wärmerohr (20) durch ein Hydro-Umformverfahren in dem Zapfen (7) gehalten wird.

6. Luftfahrzeugrad (1) nach Anspruch 5, wobei zwischen dem Wärmerohr (20) und dem Zapfen (7) ein wärmeleitendes Material angebracht ist.

7. Luftfahrzeugrad (1) nach einem der vorhergehenden Ansprüche, wobei der Kühlkörper Rippen (21) umfasst, wodurch das Ende (20.1) des Wärmerohrs (20) eine vergrößerte freie Fläche erhält.

8. Luftfahrzeugrad (1) nach Anspruch 7, wobei die Rippen (21) durch ein Hydro-Umformverfahren an dem Wärmerohr (20) befestigt sind.

9. Luftfahrzeugrad (1) nach einem der vorhergehenden Ansprüche, wobei sich das Wärmerohr (20) parallel zu der Drehachse (X) des Rades (1) erstreckt.

10. Luftfahrzeugrad (1) nach einem der Ansprüche 1 bis 8, wobei das Wärmerohr (20) in Bezug auf die Drehachse (X) des Rades (1) leicht geneigt ist, wobei das aus dem Zapfen vorstehende Ende (20.1) des Wärmerohrs weiter von der Drehachse entfernt ist als der in dem Zapfen gehaltene Wärmerohrabschnitt, und wobei das Wärmerohr mit der Rad-Drehachse einen Winkel (α) bildet, welcher kleiner oder gleich dem Winkel (β) ist, der von der Drehachse und einer Rad-Außenwand (2c) definiert ist, die zur Aufnahme eines Reifens dient.

11. Luftfahrzeug-Fahrwerk, umfassend zumindest ein Rad (1) nach einem der vorhergehenden Ansprüche.

12. Luftfahrzeug, welches zumindest ein Fahrwerk nach Anspruch 11 umfasst.

## Claims

1. An aircraft wheel (1) comprising a rim (2) fitted with rotor disks (11b) driven in rotation with the rim by means of first splines (7) secured to the rim and engaged in notches in the rotor disks, stator disks (11a) being interposed between the rotor disks and being provided with notches engaged on second splines secured to a brake torque tube (13) arranged to be fastened to an axle (4) carrying the wheel, the wheel comprising at least one heatpipe (20) having an end (20.1) projecting outside the wheel, and at least one heatsink (21) secured to said end of the heatpipe, the wheel being **characterized in that** the heatpipe is sintered and extends in at least one of the first and second splines parallel to a plane containing the axis of rotation of the wheel.

2. An aircraft wheel (1) according to claim 1, wherein the first splines (7) are integral with the wheel (1).

3. An aircraft wheel (1) according to claim 1, wherein the first splines (7) are bars fitted to the wheel (1).

4. An aircraft wheel (1) according to any preceding claim, wherein the heatpipe (20) is tubular in shape and is implanted in a bore (7.1) made in the spline (7).

5. An aircraft wheel (1) according to claim 4, wherein the heatpipe (20) is held in the spline (7) by hydroforming.

6. An aircraft wheel (1) according to claim 5, wherein a thermally conductive material is deposited between the heatpipe (20) and the spline (7).

7. An aircraft wheel (1) according to any preceding claim, wherein the heatsink comprises fins (21) imparting an increased free surface area to the end (20.1) of the heatpipe (20).

8. An aircraft wheel (1) according to claim 7, wherein the fins (21) are fastened to the heatpipe (20) by hydroforming.

9. An aircraft wheel (1) according to any preceding claim, wherein the heatpipe (20) extends parallel to the axis of rotation (X) of the wheel (1).

10. An aircraft wheel (1) according to any one of claims 1 to 8, wherein the heatpipe (20) slopes a little relative to the axis of rotation (X) of the wheel (1), the end (20.1) of the heatpipe that projects from the spline being further from said axis of rotation than the portion of the heatpipe held in the spline, and the heatpipe and the axis of rotation of the wheel forming between them an angle (α) that is less than or equal to the angle (β) defined by said axis of rotation and an outer wall (2c) of the wheel for receiving a tire.

11. An aircraft undercarriage including at least one wheel (1) according to any preceding claim.

12. An aircraft including at least one undercarriage according to claim 11.
